(19) Europäisches Patentamt
European Patent Office
Office européen des brevets

(11) Numéro de publication: **0 228 327**
**A1**

(12) **DEMANDE DE BREVET EUROPEEN**

(21) Numéro de dépôt: 86402696.8

(22) Date de dépôt: 05.12.86

(51) Int. Cl.⁴: **H 01 B 7/00**
B 60 R 25/04, H 01 H 35/00

(30) Priorité: 09.12.85 FR 8518170
26.02.86 FR 8602631
23.04.86 FR 8605848
04.06.86 FR 8608034
06.06.86 FR 8608166
18.06.86 FR 8608773
30.06.86 FR 8609424
30.07.86 FR 8611023
01.10.86 FR 8613669

(43) Date de publication de la demande:
08.07.87 Bulletin 87/28

(84) Etats contractants désignés:
ES FR GB IT NL SE

(71) Demandeur: GOULET, Michel
18, rue Nélaton
F-75015 Paris (FR)

(72) Inventeur: GOULET, Michel
18, rue Nélaton
F-75015 Paris (FR)

(74) Mandataire: Viard, Jean
Cabinet VIARD 28 bis, avenue Mozart
F-75016 Paris (FR)

(54) **Câble antivol et dispositif de montage d'un tel câble.**

(57) Selon l'invention, les extrémités de l'âme (1) du câble sont reliées à au moins une pièce (4) mobile dans un boîtier (3) et armée par un ressort (11), des moyens de verrouillage (18) s'opposant au rétablissement du passage du courant après coupure de l'âme (11) ou de la gaine (2).

FIG.10

EP 0 228 327 A1

**Description**

Câble et dispositif antivol, notamment pour véhicule automobile.

La présente invention a pour objet un câble électrique antivol du type comprenant une âme intérieure conductrice et une gaine extérieure isolante, ainsi qu'un dispositif de montage d'un tel câble destiné en particulier, mais non exclusivement, aux véhicules automobiles à moteur terrestres, nautiques ou aériens.

On sait que le vol des véhicules automobiles est un véritable fléau du monde actuel. L'existence d'une clé de contact que le propriétaire emmène avec lui constitue une première précaution, cette clé de contact agissant simultanément par un blocage mécanique de la colonne de direction et par coupure du circuit électrique du moteur. Les vols les plus fréquents sont ceux qui sont réalisés par la mise en route frauduleuse du moteur, soit à l'aide de fausses clés de contact, soit à l'aide de branchements électriques temporaires court-circuitant les organes de sécurité et notamment le bloc contacteur de la clé. La présente invention a pour objet d'interdire ce second type de vol.

Afin d'établir ces branchements électriques temporaires du démarreur et du moteur, la voie la plus habituellement pratiquée consiste à dénuder les extrémités d'un câble électrique et à se brancher sur l'âme. La présente invention a pour objet de remédier à cet inconvénient en interdisant, à celui qui a procédé au dénudage d'une partie d'un câble électrique, l'accès à l'âme de celui-ci.

Il a déjà été proposé dans FR-A-647 129 un conducteur électrique élastique. Ce conducteur est constitué, quels que soient son diamètre et sa longueur, par un fil d'acier roulé en spires serrées formant un véritable ressort de traction qui est employé nu ou isolé. Dans le cas où le conducteur est isolé, il est logé à l'intérieur d'un tube isolant élastique. On obtient ainsi un conducteur électrique élastique permettant un allongement de plusieurs fois la longueur initiale sans déformation ni fatigue des spires métalliques.

Est également connu par US-A-2 820 149 (ROTH) un dispositif pour éviter le vol d'un véhicule à moteur dans lequel le bloc de la clé de contact est relié au rupteur par un câble comprenant une gaine métallique, une couche d'isolant et une âme rectiligne. La couche d'isolant est enroulée en spirale et sous tension, de manière à ce que, lorsque le câble est rompu, il y ait rétraction de la gaine isolante, ce qui se traduit par l'établissement d'un court-circuit entre l'âme conductrice et la gaine extérieure métallique reliée à la masse. Un tel montage ne s'oppose nullement à l'établissement d'une connexion parallèle entre le boîtier de la clé de contact et le rupteur, lui-même relié à la bobine d'allumage.

Le brevet US-A-2 563 335 (ISTRATI) décrit un dispositif de sécurité commandé par une tirette se trouvant à l'intérieur de l'habitacle, dispositif qui, dans une position déterminée de la tirette, s'oppose à l'alimentation par la batterie du système d'allumage. A nouveau, ce dispositif permet également d'établir des connexions parallèles, ce qui permet l'utilisation frauduleuse du véhicule.

Le circuit d'alimentation électrique d'un véhicule se présente comme une succession de tronçons reliant des organes assurant une fonction déterminée et notamment le tronçon batterie-clé de contact, clé de contact-relais de démarreur, clé de contact-bobine, bobine-rupteur, etc...

Lorsqu'un fil a été coupé ou arraché à l'une de ses extrémités, il reste branché à son autre extrémité et, par suite, peut être utilisé pour shunter un organe, et par exemple le bloc-contacteur.

La présente invention a pour premier objet d'empêcher l'utilisation d'une partie du circuit d'origine pour établir un circuit parallèle après débranchement d'une connexion.

Mais, si les contacteurs restaient en l'état, il serait bien entendu possible de brancher entre les deux contacteurs d'extrémité un câble de remplacement. Aussi, un second objet de la présente invention est d'interdire, après un débranchement, l'utilisation des connecteurs ou contacteurs constituant du tronçon dont l'une des extrémités a été débranchée, ou qui a été interrompu en un point quelconque de la longueur du câble.

A cet effet, la présente invention assure d'une part l'interruption du passage du courant au niveau des contacteurs d'extrémité du câble, mais également le verrouillage du contacteur qui ne peut plus être utilisé sans un démontage nécessitant du temps et des outils spécialisés. Dans ces conditions, la mise en marche du véhicule ne peut être effectuée très rapidement, ce qui dissuade les voleurs éventuels.

Selon la présente invention, le câble électrique antivol comprenant au moins une âme conductrice, une gaine au moins en partie isolante et des moyens de connexion, est caractérisé en ce qu'il est connecté entre une source de tension électrique et l'organe utilisateur par l'intermédiaire d'au moins un contacteur, ledit contacteur recevant, une information sur l'état, conducteur ou non, du câble, et des moyens pour interrompre le passage du courant en fonction de cette information. Ainsi, la rupture du câble en un point quelconque se traduit non seulement par l'interruption du passage du courant au point de rupture, mais également au niveau des contacteurs.

Selon une autre caractéristique de l'invention, l'information sur l'état conducteur ou non du câble agit sur des moyens de verrouillage du contacteur.

Avantageusement, l'information est transmise par le câble lui-même, c'est-à-dire par l'âme ou par la gaine. Cette information peut être transmise par voie mécanique, électrique ou autre. Elle indique au contacteur que le câble est conducteur ou non-conducteur. Une interruption en un point quelconque du câble provoque le passage de l'état conducteur, à l'état non conducteur avec verrouillage.

L'établissement du passage du courant électrique peut provenir de la position relative entre le fil (ou âme) conducteur et la gaine isolante, dans le cas où l'âme et la gaine sont libres l'un par rapport à l'autre, et dans ce cas, la rupture mécanique de l'âme entraîne non seulement la rupture du passage du courant à l'intérieur de l'âme, mais également le verrouillage du boîtier.

Selon une autre caractéristique de l'invention, après montage, l'âme est sous tension mécanique et maintient un contact mécanique entre des pièces du boîtier de connexion.

Selon encore une autre caractéristique de l'invention, l'âme est enroulée en spirale, la gaine étant inextensible, et la longueur de la spirale au repos est inférieure à la longueur de la gaine.

Mais bien entendu, il est souhaitable que la gaine extérieure présente un maximum de résistance. Aussi, de préférence, la gaine extérieure est réalisée en une matière plastique armée de fibres longitudinales d'un matériau résistant en traction. En effet, lorsque les possibilités de contact sont dégagées d'un côté du conducteur, il importe que la gaine ne puisse pas être aisément arrachée, de sorte que le voleur ne puisse se connecter par un câble de secours à l'autre extrémité de la connexion. La gaine extérieure est réalisée avantageusement en une matière plastique difficile à couper telle que du Rilsan armé de fibres longitudinales qui peuvent être en polyamide aromatique ou Kevlar, voire en acier.

La sécurité ainsi procurée par la structure du câble ne trouve sa pleine justification que dans le cas où celui-ci présente des extrémités scellées à l'intérieur de blocs contacteurs inviolables. Aussi, la présente invention concerne un dispositif de mise en oeuvre caractérisé en ce que l'âme est reliée de part et d'autre à une pièce de connexion mobile à l'intérieur d'un contacteur, ladite pièce de connexion pouvant être verrouillée a l'intérieur du contacteur fixé sur le véhicule.

L'âme en spirale peut être bobinée sur, ou intégrée à un noyau élastique isolant. Ainsi, les fonctions de conduction de l'électricité et d'application d'une tension mécanique sont dissociées, ce qui permet d'utiliser pour l'âme du conducteur, un fil électrique sans caractéristiques mécaniques particulières à l'exception de la présence de zones de moindre résistance mécanique aux extrémités.

Il a été constaté qu'il n'était pas nécessaire que la tension exercée sur le câble résulte du câble lui-même. Par suite, le câble, ou plus précisément son âme, peut être rectiligne et/ou linéaire, la tension étant appliquée à l'aide des ressorts. Il peut également n'être spiralé que sur une faible partie de sa longueur.

Dans un mode de réalisation l'âme du câble reliant deux contacteurs est au moins en partie linéaire, la tension établie entre les deux contacteurs provoquant l'application de chaque côté d'une pièce solidaire de l'extrémité de l'âme contre une zone conductrice et l'écrasement d'un ressort, la zone conductrice étant reliée à une source électrique ou à un appareil utilisateur.

Ainsi, c'est le ressort de chaque boîtier, travaillant en compression qui va provoquer la tension sur l'âme et non plus la structure en spirale.

Mais, en vue du montage, il est nécessaire que la gaine soit montée d'une manière amovible sur le boîtier. Même si des moyens de blocage sont prévus, cette gaine sera toujours plus ou moins aisément démontable. Si les mouvements de la gaine et ceux du fil électrique sont indépendants, de manière à permettre un glissement relatif de l'âme pour interrompre le passage du courant, le voleur peut avoir accès à l'âme qui n'a pas été interrompue, cette âme étant toujours conductrice de courant.

Avantageusement, le dispositif à câble antivol dans lequel le fil électrique peut se déplacer par rapport à la gaine, ce fil étant relié à au moins une de ses extrémités à une pièce de contact pouvant coulisser à l'intérieur d'un contacteur et armée par un ressort, est caractérisé en ce que la cosse de contact est protégée par un fourreau dont la longueur est supérieure à celle de la cosse.

Il devient ainsi impossible de faire un branchement parallèle après démontage de la gaine sans rupture du fil central. On peut prévoir, afin de faciliter le mouvement relatif de l'âme et de la gaine, d'introduire des billes entre ces deux constituants. De telles billes transforment un effort radial (par exemple lors d'un essai de coupure du câble avec une pince) en un effort longitudinal qui est répercuté sur la gaine, ce qui provoque une action de coupure de la part du boîtier. Avantageusement, on peut substituer aux billes des petits troncs de cône qui viennent porter sur l'âme lors d'une tentative de coupure pour tirer celle-ci dans une direction et la repousser en direction opposée. Dans ce cas, l'un des contacteurs d'extrémité coupe le contact.

La présente invention vise également le cas où la gaine isolante et l'âme conductrice sont mécaniquement solidaires, ce qui est le cas des câbles ordinaires où le fil conducteur est noyé dans une gaine d'isolant.

Selon encore une autre caractéristique de l'invention, dans le dispositif de montage antivol d'un câble électrique, dont au moins une extrémité de l'âme du câble est solidaire d'une pièce mobile à l'intérieur d'un boîtier, la pièce mobile est appliquée contre une surface conductrice par des moyens de compression, des second moyens empêchant le contact de la pièce avec la surface conductrice lorsque le câble a subi une traction.

Ainsi, l'âme conductrice peut être noyée dans une gaine isolante et solidaire de celle-ci, la gaine étant armée ou non. De préférence, la gaine est résistante au cisaillage et au perçage et, comme tout essai de cisaillage se traduit toujours par une traction sur le câble, cette traction entraîne le débranchement, c'est-à-dire l'écrasement du ressort et le déplacement de la pièce à l'intérieur du boîtier. La présence de moyens de verrouillage empêche le rétablissement du contact sans intervention d'un spécialiste qui devra procéder au démontage du boîtier. Le corps du contacteur lui-même est solidaire de l'organe qui est à protéger ou encore du tablier, lorsqu'il s'agit de protéger la zone de la clé de contact.

La présente invention permet d'établir une sécurité dans le cas où la gaine subit une tentative de démontage, comme dans le cas où l'âme est coupée lorsque l'âme peut se déplacer par rapport à la gaine. Le câble comprenant une âme conductrice et une gaine isolante entourant l'âme, l'âme et la gaine pouvant subir des translations relatives, au moins une extrémité de l'âme du câble étant solidaire d'une pièce mobile à l'intérieur du boîtier, est caractérisé en ce qu'un fourreau est solidarisé de la gaine, le fourreau entourant l'âme et pénétrant à l'intérieur du boîtier de manière à venir en butée contre une plaque portant un contact électrique, la pièce mobile comportant à sa partie avant une zone de diamètre réduit pouvant passer à travers une ouverture formée dans une plaque fixée à l'intérieur du boîtier, un ressort étant disposé entre le fond de la pièce de contact et la plaque porte-contact.

Selon une autre caractéristique de l'invention, la plaque porte-contact est munie de pattes élastiques dont l'extrémité libre porte, soit sur la paroi latérale du fond de la pièce, soit sur la paroi latérale de la pièce. Ces pattes ont pour but de former des butées de verrouillage s'opposant au rétablissement du courant lorsqu'une tentative de vol a été effectuée. Ainsi, selon la présente invention, lorsque l'âme se déplace par rapport à la gaine, le passage du courant est interrompu, tant en cas de coupure de l'âme, qu'en cas de démontage de la gaine.

Dans un autre mode de réalisation, au moins un fil conducteur, relié de part et d'autre à des moyens d'interruption du courant électrique, est noyé à l'intérieur de la gaine. La rupture de ce fil conducteur, au début du cisaillage de la gaine, signale l'existence d'une manoeuvre frauduleuse, ce qui peut déclencher une alarme. De préférence, la coupure de ce conducteur se traduit par la coupure du circuit principal.

Dans ce cas, les moyens d'interruption du courant électrique consistent en au moins un interrupteur électromagnétique connecté en série dans le circuit d'alimentation principal.

Avantageusement, la gaine est montée de manière amovible sur l'extrémité supérieure de la tête d'allumage, l'âme du câble étant solidaire d'une jupe établissant le contact entre l'âme et une plage conductrice de la tête d'allumage lorsque la gaine est convenablement montée.

D'autres caractéristiques et avantages de la présente invention apparaîtront au cours de la description qui va suivre de modes particuliers de réalisation, donnés uniquement à titre d'exemples non limitatifs, en regard des dessins qui représentent :

- La figure 1, une vue d'un câble selon l'invention avec arrachement partiel de la gaine ;

- les figures 2 et 3, des vues en coupe de l'extrémité d'un câble selon l'invention monté dans un bloc connecteur, en position "non conducteur" et en position conducteur respectivement ;

- la figure 4, une vue en coupe d'un mode particulier de montage ; et

- la figure 5, une vue de face d'une pièce conductrice permettant la mise en place du câble ;

- la figure.6, un autre mode de réalisation du câble ;

- la figure 7, un autre mode de réalisation ;

- la figure 8, une vue schématique d'un boîtier de raccordement lors du fonctionnement normal ;

- la figure 9, une vue du même dispositif après sectionnement du câble, à l'extrémité opposée ;

- la figure 10, une vue d'une extrémité d'un câble et de son boîtier de connexion en position conducteur ;

- la figure 11, dans les mêmes conditions, la position des différents éléments du dispositif après rupture du câble ;

- la figure.12, une vue en coupe d'un dispositif selon l'invention en position de fonctionnement, sur l'un des côtés du câble, dans un montage avec jupe de protection ;

- la figure 13, une vue du même dispositif après coupure du câble ;

- la figure 14, une vue en coupe d'un autre mode de réalisation d'un boîtier en position conducteur ;

- la figure 15, le même boîtier après traction exercée sur la gaine ou sur l'âme ;

- la figure 16, un schéma en coupe de la position des différents organes d'un boîtier en position conducteur ;

- la figure 17, un schéma identique dans le cas où l'âme et la gaine ont été coupées en un endroit quelconque

- la figure 18, un schéma identique dans le cas où la gaine a été démontée ;

- la figure 19, une vue selon la flèche F de la figure 18 de la plaque porte-contact ou porte-électrode ;

- la figure 20, dans les mêmes conditions, la plaque fixe ;

- les figures 21 à 23, des schémas montrant le fonctionnement du dispositif des pattes anti-retour ;

- la figure 24, un autre mode de réalisation de l'invention ;

- la figure 25, une vue en coupe verticale partielle d'un distributeur muni d'un boîtier selon l'invention ;

- la figure 26, une vue par-dessus en coupe, selon la ligne II-II de la figure 25, de l'organe de blocage anti-retour ;

- la figure 27, une vue d'un ensemble bobine-distributeur intégré, la bobine étant munie d'un boîtier selon l'invention.

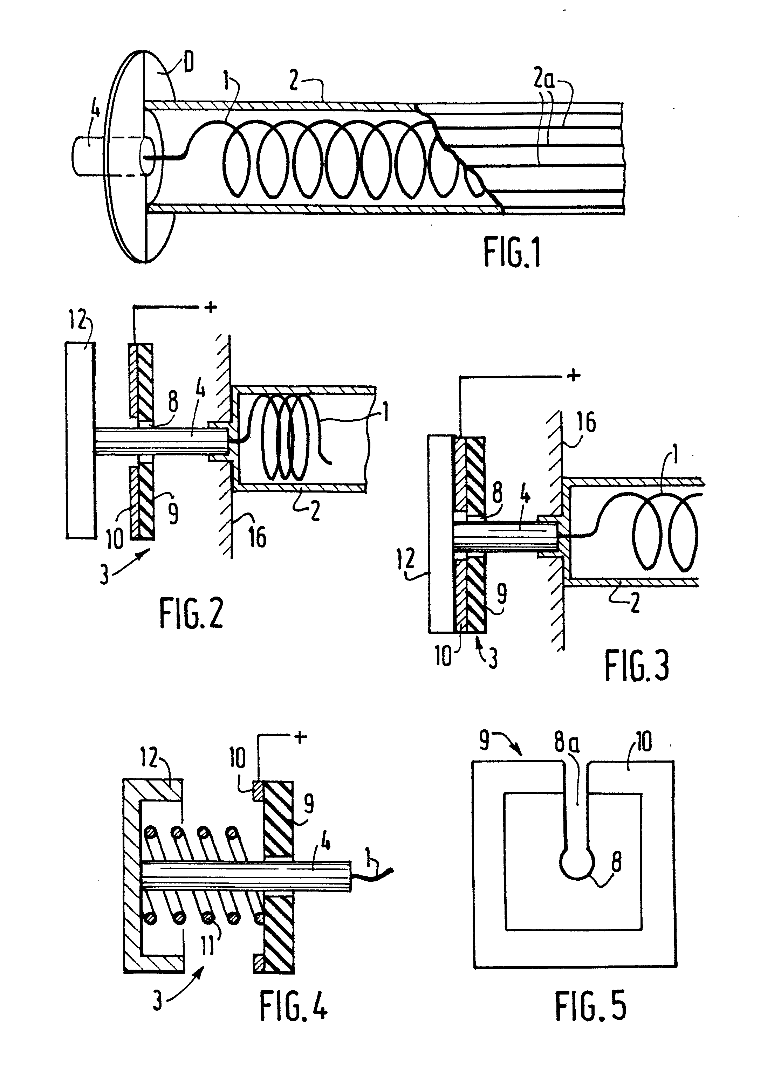

Sur la figure 1, on voit que le câble est constitué par un fil électrique 1 constituant l'âme enroulée en spirale. Ce fil présente l'élasticité nécessaire pour constituer une sorte de ressort. La spirale est incluse dans une gaine isolante 2 par exemple en "RILSAN" (marque déposée) présentant des fils d'armature longitudinaux 2a par exemple en polyamide aromatique ou en acier, de manière à présenter une bonne résistance aux tentatives de coupure. Etant donné la résistance de la gaine 2, la coupure de celle-ci entraîne automatiquement la coupure du fil 1. Et dès qu'il y a coupure, le fil 1 se rétracte à l'intérieur de la gaine. Bien entendu, la longueur de chaque câble est déterminée pour correspondre au trajet exact entre un boîtier métallique contacteur scellé se trouvant dans le compartiment moteur ou sous le plancher du véhicule, et le contacteur à clé qui est généralement situé au voisinage de la colonne de direction. Le fil électrique 1 est solidaire à ses deux extrémités de pièces de contact 4. Ces pièces de contact, outre leur fonction habituelle, exercent la fonction d'éléments de traction, permettant de maintenir la spirale de fil conducteur 1 sous tension. La liaison entre le fil 1 et la borne 4 est avantageusement fragilisée dans le sens transversal. A cet effet, avant montage, des disques D pouvant être brisés sont disposés derrière les pièces de connexion 4, du côté intérieur du câble pour maintenir l'âme 1 tendue. A ce moment, la tension est voisine du point de rupture du fil 1. La tension est toujours appliquée sur la spirale par des éléments extérieurs, et montés dans un contacteur.

La pièce de connexion 4 qui peut être par exemple à section cylindrique peut présenter un trou radial dans lequel peut venir s'introduire une broche conductrice reliée à la haute tension du circuit d'alimentation du moteur. Dans le mode de montage représenté sur les figures 2 et 3, sur lesquelles n'a pas été représenté le boîtier du contacteur, la référence 16 indique la paroi sur laquelle est monté le boîtier du contacteur, la pièce 4 passe à travers un orifice 8 prévu dans une plaque 9 solidaire du boîtier de connexion. La plaque 9 est isolante, mais présente du côté intérieur au boîtier (à gauche sur la figure) une surface conductrice 10. La surface 10 est reliée par exemple au pôle positif de la batterie.

Le processus de montage est le suivant. La pièce 4 est introduite à l'intérieur de la pièce de connexion 9 qui est isolante, à travers l'orifice 8, 8a. A ce moment, le conducteur 1 est toujours maintenu sous tension par les disques D. Le disque de maintien D est alors séparé en deux parties et extrait du boîtier de montage. Dans le mode de montage qui est représenté sur les figures 2 et 3, la broche a été remplacée par une tête 12 solidaire de la pièce 4. Sous l'influence de la traction exercée par le fil en spirale 1, la pièce 4a est tirée vers la droite de la figure (figure 3), elle amène l'extrémité de celle-ci en contact avec la surface conductrice 10 et le contact est ainsi établi du côté considéré du câble. Il en va de même de l'autre côté. Le câble est ainsi tendu entre les deux pièces de connexion 9 et reste dans cette position tant qu'aucune tentative frauduleuse n'est effectuée. Lorsque l'on coupe celui-ci, le fil 1 est coupé et se rétracte à l'intérieur de la gaine comme il a été dit précédemment. Cette traction libère le contact exercé par le chapeau 4a sur la surface 10 et le contact est également coupé comme cela est représenté sur la figure 2. Comme de plus, ce contact ne peut pas être rétabli directement, il est impossible de relier électriquement les deux pièces.

La figure 4 représente une variante de montage sur laquelle on retrouve le fil 1 enroulé en spirale qui est terminé à chaque extrémité par une tête 12. Comme précédemment, le fil 1 passe à travers un trou 8 prévu dans une pièce isolante 9 portant une zone périphérique conductrice 10. Entre la pièce 9 et l'extrémité 4 du fil conducteur 1, est interposé un ressort de rappel 11 dont le coefficient de compressibilité est bien inférieur à celui du ressort constitué par le fil 1. Ainsi, lors du montage et de l'utilisation normale du câble selon l'invention, l'âme 1 applique sur la pièce 4 une tension qui amène les branches du U 12 contre les zones conductrices 10 de la pièce 9. Le ressort 11 est compressé et le contact est normalement établi. Par contre, lorsque le fil 1 est coupé (cas représenté sur la figure 4), le ressort de rappel 11 éloigne la pièce 4 de la zone conductrice 10 et le contact est coupé. Un verrouillage est prévu, s'opposant au rapprochement du contact 4 et de la zone 10. Il est également possible de prévoir un déplacement de la tige 4 tel que celle-ci tombe à l'intérieur du boîtier. Comme précédemment, ce contact ne peut être rétabli d'une manière frauduleuse et il est nécessaire, après une telle manoeuvre de monter sur le véhicule un câble neuf.

La figure 5 représente en vue de face une plaque de connexion 9 et l'on distingue sur cette pièce la zone extérieure conductrice 10, une fente 8a de passage de la tige 4 débouchant dans le trou 8. La plaque de connexion 9 est incluse dans un boîtier de sécurité inviolable 3.

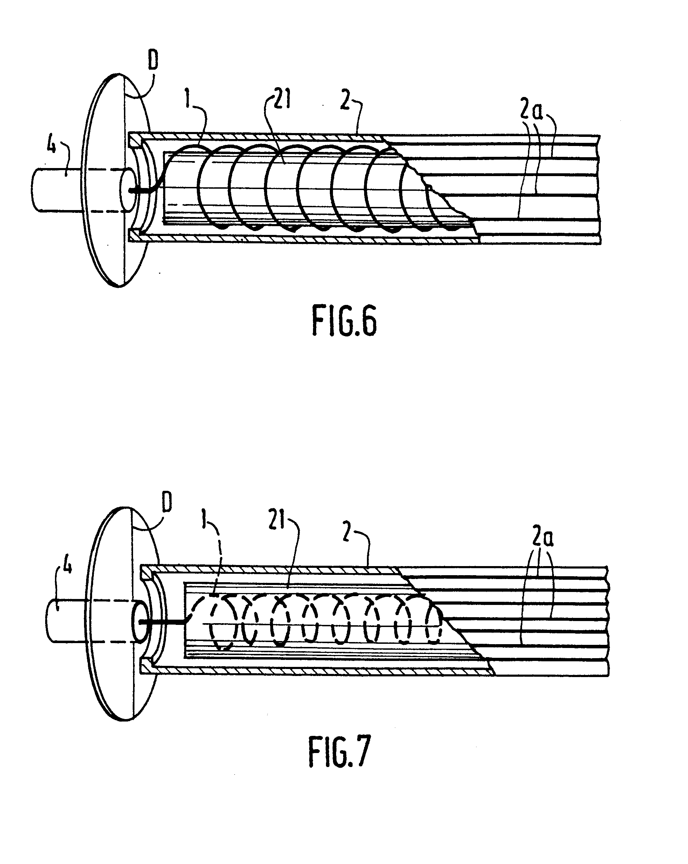

Dans l'exemple de réalisation réprésenté sur la figure 6, le fil conducteur 1 est bobiné en spirale sur un noyau 21 présentant une élasticité longitudinale permanente tel que du néoprène par exemple. Aux deux extrémités du noyau 21, le fil 1 pénètre à l'intérieur du noyau de manière à émerger radialement de celui-ci et être soudé, ou plus généralement connecté électriquement, à une broche 4, l'ensemble étant posé tendu. Alternativement, et comme représenté sur la figure 7, les spires de l'âme 1 peuvent être noyées à l'intérieur du noyau 21. Ainsi, le fil électrique constituant l'âme 1 ne doit pas obligatoirement présenter des caractéristiques élastiques importantes, l'élasticité résultant du noyau.

De préférence, le noyau 21 est réalisé en néoprène du dureté shore comprise entre 100 et 140, sous une tension de 700 g environ, l'extension est de 5 à 6%. Dans le mode de réalisation à âme noyée, le dénudage du fil est pratiquement impossible.

Par contre, la dureté relative du néoprène se traduit par une rétraction moins importante de l'âme en cas de coupure du conducteur. Aussi, le câble est branché entre deux contacteurs dans lesquels le contact ne peut être maintenu que par une tension de l'âme conductrice, quel que soit le contour que le câble est amené à suivre dans le véhicule.

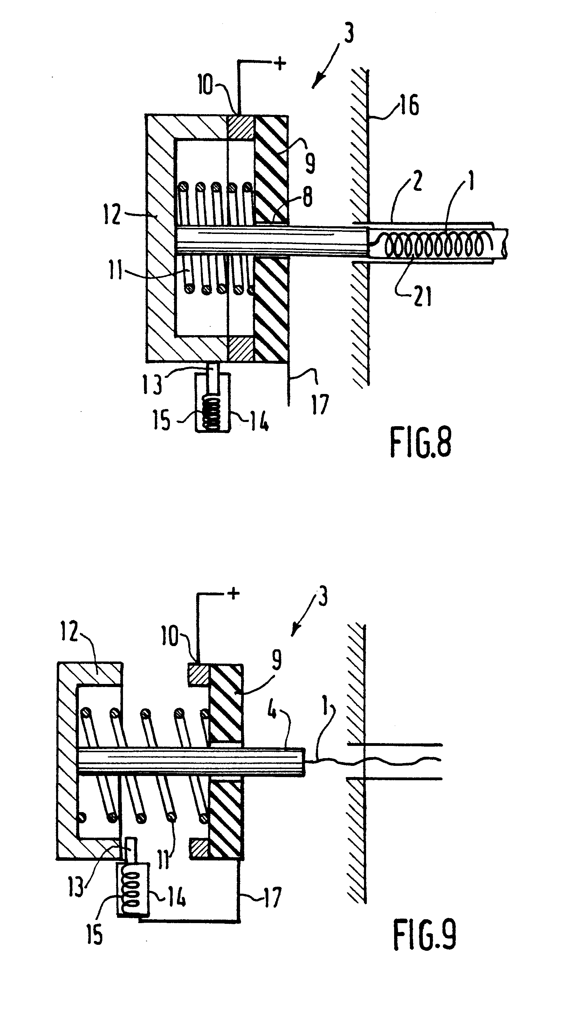

Les figures 8 et 9 représentent un des boîtiers 3, respectivement en position "conducteur" ou de contact et en position "non conducteur". On y retrouve une cosse 4 présentant une tête 12, une plaque isolante 9 percée d'un orifice central présentant une zone périphérique conductrice 10. Un ressort de rappel 11 est interposé entre la plaque 9 et la tête 12. Bien entendu, le coefficient de compressibilité du ressort est très inférieur à celui du resort constitué par l'ensemble âme 1 - noyau 21.

Sur la figure 8, les branches du U 12 sont appliquées contre les zones conductrices 10 de la pièce 9 sous l'influence de la traction exercée par l'âme 1. Une butée escamotable 13 est disposée au-dessous de la pièce 12, la butée 13 étant armée par un ressort 15 inclus dans un logement 14 solidaire de la paroi 17 du boîtier. Lors du montage du câble, la butée se rétracte à l'intérieur du logement 14 et comprime le ressort 15. La référence 16 indique une paroi fixe du véhicule.

Lorsqu'une tentative de vol est effectuée sur le câble, il se produit, comme représenté sur la figure 9, un retrait de la pièce 12 qui conduit à l'interruption de l'alimentation électrique du câble 1. Mais au cours de ce mouvement de retrait, la portée entre la tête 12 et la butée 13 est interrompue. Il en résulte que celle-ci fait saillie hors du logement 14 et interdit tout nouveau mouvement vers la droite de la figure, c'est-à-dire que la butée 13 s'oppose au rétablissement du contact. Celui-ci est alors définitivement interrompu. Ainsi, même un petit déplacement de l'âme 1 se traduit par la perte définitive de possibilité de rétablissement du circuit.

Bien entendu, tout autre dispositif connu de verrouillage peut être mis en oeuvre. Le véhicule est ainsi immobilisé et son retour en état de service doit être réalisé par un technicien qui rétablit les connexions nécessaires.

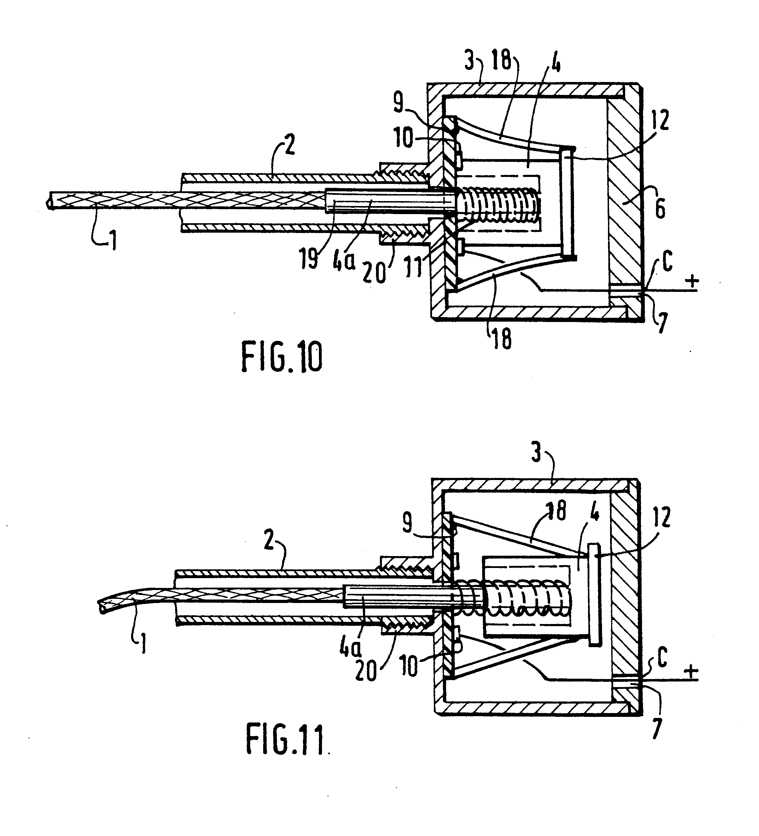

Sur la figure 10, qui est une coupe verticale d'un contacteur, la gaine 2 étant assujettie sur un boîtier 3 par un guide-câble 20. L'âme 1 conductrice est solidarisée d'avec une cosse 4a faisant partiellement saillie, par sa partie avant, à l'extérieur du boîtier 3. Cette solidarisation peut être effectuée par soudure et écrasement, à la manière des cosses automobiles traditionnelles, soit encore au moyen d'un vissage, ou par la combinaison des deux moyens. La présence d'une liaison par vissage donne la possibilité de régler la tension du câble, le dévissage étant interdit par une soudure ultérieure. La pièce mobile se compose d'un corps cylindrique 4 à l'intérieur duquel est fixée la cosse de contact 4a. C'est la tige 4a qui est reliée à l'âme 1 en 19. Conformément à une caractéristique de l'invention, le corps cylindrique 4 se prolonge à son extrémité arrière par une couronne 12, le diamètre extérieur de la couronne 12 étant supérieur au diamètre du corps cylindrique 4.

A la périphérie de cette couronne, viennent prendre appui des pattes élastiques 18 dont le rôle sera décrit par la suite. Le boîtier 3 est fermé par un couvercle 6 qui peut être par exemple vissé avec interposition d'une colle epoxy du type de celle connue sous le nom de "LOCTITE" (marque déposée).

Dans la position représentée sur la figure 10 (position conducteur), la partie avant de la pièce cylindrique 4 vient porter sur une plage conductrice 10. La pièce cylindrique est maintenue et le contact est établi sous l'action de la tension appliquée sur l'âme 1. Cette tension provoque l'écrasement d'un ressort 11 contre une plaque isolante 9 en forme de disque, qui porte la plage conductrice 10. Un ressort identique est disposé dans le boîtier de l'autre extrémité du câble et les deux ressorts 11 sont calibrés pour que la tension exercée sur le câble doit de l'ordre de un à deux kilos pour éviter toute déconnexion accidentelle. D'autre part la plaque 9 sert à maintenir les pattes élastiques 18 par leurs extrémités avant, les extrémités arrières reposant sur la collerette 12. Le couvercle 6 est percé d'une ouverture 7 à l'intérieur de laquelle passe un câble électrique C relié par exemple au pôle positif de la batterie d'accumulateur. Le conducteur C est bien entendu relié à la plage conductrice 10. Le ressort 11 prend appui d'une part contre la face arrière de la plaque isolante 9 et d'autre part dans le fond de la cavité prévue à l'intérieur du corps cylindrique 4.

Lorsque le câble est cisaillé, la tension exercée sur celui-ci par l'ensemble des deux ressorts 11 sur chacune des deux extrémités est interrompue. Par suite, la pièce 4 recule sous l'action de la détente du ressort 11 situé du côté opposé au cisaillage, il en va de même de la pièce correspondante de l'autre boîtier. Au cours de ce mouvement, les pattes élastiques 18 se rabattent le long du corps 4 et le contact entre le corps 4 et le circuit 10 est interrompu. Les pattes élastiques 18, en se rabattant sur le corps 4, forment des butées s'opposant au rapprochement de la pièce 4 et de la zone 10 et par suite au rétablissement du contact électrique.

On a représenté sur les figures 10 et 11, deux pattes élastiques diamétralement opposées, mais il est bien évident que leur nombre peut être quelconque pour assurer le résultat recherché. En tant que de besoin, il est possible de prévoir dans la couronne 12 des encoches bloquant les pattes 18 après leur relâchement. Tout autre dispositif de verrouillage peut également être utilisé.

Bien entendu, l'âme 1 doit pouvoir coulisser librement à l'intérieur de la gaine 2, et de préférence, cette âme est revêtue extérieurement d'une couche de Téflon, ou en tout autre matériau à faible coefficient de frottement, permettant ce libre coulissement, lorsque l'âme est en contact avec la gaine.

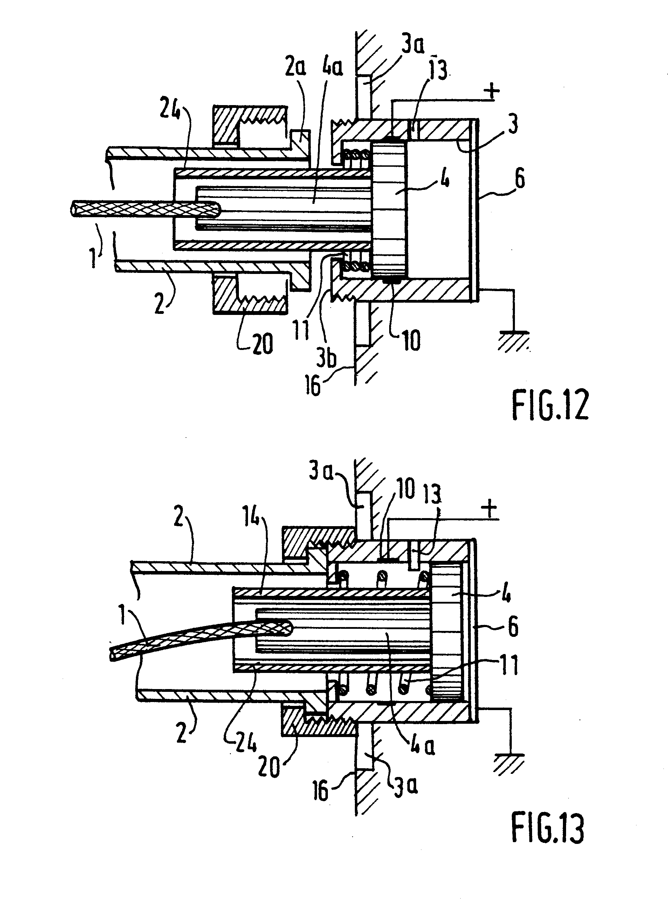

Sur la figure 12, qui est une vue coupée en plan vertical, l'âme 1 est solidarisée avec la pièce de contact 4 qui se compose d'un corps dont la section est adaptée à la section interne du boîtier 3 se prolongeant du côté de l'âme par une cosse de contact 4a. A sa partie arrière, le boîtier est fermé par un couvercle 6.

Sur la figure 12, le bord extérieur de la pièce 4 vient en contact avec une zone 10 conductrice en couronne et reliée à la source de tension ou à l'appareil utilisateur. En fait, il importe surtout qu'en cas de manoeuvre frauduleuse, le courant soit coupé et, de l'autre côté du câble, on peut retrouver, soit un boîtier, soit encore une cosse à ressort permettant d'obtenir la tension mécanique désirée. Le boîtier 3 est soudé sur le châssis du véhicule 16 ou sur une paroi fixe quelconque par une bride 3a, par exemple par rivetage ou soudure. Bien entendu, dans ce cas, l'ensemble de la surface interne du boîtier 3 est isolant, à l'exclusion de la zone conductrice 10. La gaine 2 se termine, à sa partie antérieure (du côté du boîtier) par une zone annulaire 2a, cette zone annulaire étant appliquée contre la face avant 3b du boîtier 3 par un écrou 20.

Comme cela est représenté sur la figure 12, il est possible, alors que le câble est sous tension mécanique et que le passage du courant électrique est assuré, de démonter la gaine en dévissant l'écrou 20. A ce moment, la gaine peut reculer de quelques millimètres, même si elle est incompressible. Ce mouvement est également limité par le fait que l'âme interne ne peut pas subir de tension supplémentaire sans se rompre, ce qui réduit les possibilités de manoeuvre.

Mais il serait donc théoriquement possible de se brancher sur la cosse 4a en glissant un conducteur entre la face avant du boîtier 3b et l'anneau 2a de la gaine. Afin de pallier cet inconvénient, on prévoit de préférence la présence d'un fourreau 24 entourant la cosse 4a, de manière à ce que dans cette hypothèse, l'accès direct à la cosse soit interdit. Ce fourreau peut être isolant et solidarisé du corps 4 ou encore consister en une paroi métallique isolée du corps 4. Le perçage du fourreau se traduit par une tension supplémentaire sur le fil 1 qui se rompt, ce qui entraîne l'interruption du courant.

La figure 13 représente le cas où l'âme 1 a été rompue sans que la gaîne, du côté représenté, n'ait subi de tentatives de démontage. Comme cela apparaît sur la figure, la rupture du fil 1 provoque la détente du ressort 11 et par suite, le déplacement du piston constitué par le corps 4 vers la droite de la figure 13. Il en résulte un retrait du corps 4 et par suite, l'arrêt du courant à l'intérieur du fil 1. Au cours de ce mouvement de retrait, la butée 13 prend une position basse et s'oppose au retour du corps 4 vers la zone conductrice 10. Pour éviter tout problème électrique, le fond 6 du boîtier 3 peut, par exemple, être connecté à la masse.

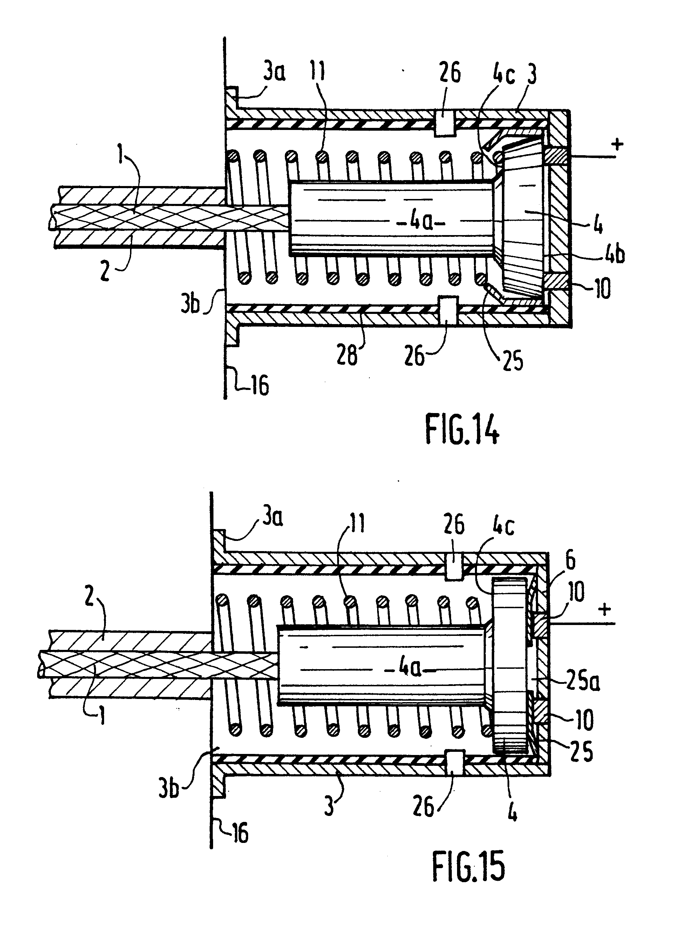

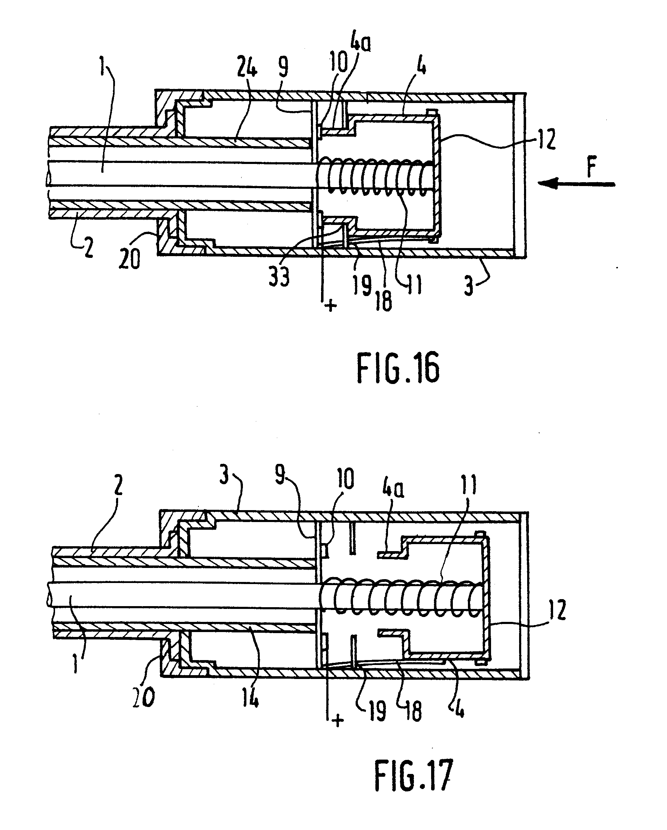

Dans les exemples qui ont été donnés jusqu'à maintenant, l'âme pouvait glisser par rapport à la gaine. Le mode de réalisation représenté sur les figures 14 et 15 est destiné à produire son effet antivol vis-à-vis de l'arrachement d'un câble, alors que les autres modes sont relatifs à la coupure du câble.

Sur la figure 14, l'âme 1 du câble est emprisonnée dans et solidaire d'une gaine 2. Le câble est dénudé à son extrémité, de manière à ce que l'âme 1 puisse venir se solidariser, par exemple par soudure, sur la cosse 4a, elle-même solidaire de la pièce de contact 4 sans traction sur le fil. Comme indiqué précédemment, la pièce 4 est mobile à l'intérieur d'un contacteur (par exemple cylindrique), dont le boîtier 3 est fixé sur le châssis ou sur le tablier de la voiture par une bride 3a vissée ou soudée par points. L'intérieur du boîtier est avantageusement revêtu d'une couche isolante 28 ou d'un manchon en matière plastique à faible coefficient de frottement. La cosse 4a est métallique et conductrice. Dans l'exemple représenté sur les figures 14 et 15, à l'intérieur du boîtier se trouve également un ressort 11 qui prend appui sur la face avant 3b du boîtier d'une part, et sur la face 4cde la pièce mobile 4 d'autre part. En fonctionnement normal, comme indiqué sur la figure 14, ce ressort est légèrement comprimé en raison de ses dimensions par rapport à celles du boîtier. Comme représenté sur cette figure, le fond 4b de la pièce 4 est appliqué sous la pression du ressort 11 contre la surface conductrice 6 ou sur une zone annulaire 10 sur laquelle vient porter la face 4b, de manière à ce que la surface de contact soit au moins égale à la section de l'âme 1 du câble. La zone 10 peut être constituée de deux contacts fermant le circuit de commande d'une gâchette de thyristor conduisant le courant principal.

Conformément à la présente invention, des moyens de verrouillage sont prévus à l'intérieur du boîtier 3. Dans le mode de réalisation représenté, ces moyens sont constitués par une collerette 25 de matière élastique dont le diamètre de l'ouverture au repos est inférieur au diamètre de la surface 4b de la pièce de contact 4, lorsque celle-ci est cylindrique. La collerette 25 est fixée dans le fond du boîtier. Lorsque, par une manoeuvre frauduleuse, une traction est exercée dont la force est supérieure à la résistance du ressort 11 sur le fil conducteur ou sur la gaine, la pièce 4 se déplace vers la gauche de la figure 14, c'est-à-dire vers l'avant du boîtier contacteur 3, et le ressort 11 est écrasé en fonction de l'effort de traction qui est appliqué sur le câble. Au cours de ce mouvement, la pièce 4 se dégage de la collerette 25 en écartant les bords de celle-ci qui reste en position dans le fond du boîtier. A cet effet, la face 4c de la pièce 4 peut être légèrement tronconique (figure 14) pour faciliter le dégagement, ou cylindrique (figure 15). Le mouvement de la pièce 4 interrompt le contact électrique existant entre la surface 10 et l'âme 1. Lorsque l'effort est relâché, sous l'action du ressort 11, la pièce 4 revient vers la droite. Au cours de son mouvement de retour, elle porte sur le bord avant de la collerette 25 par sa surface 4b et écrase celui-ci contre la paroi 6. La présence de cette collerette interdit le contact entre la pièce 4 et les contacts 10, et il subsiste ainsi entre la pièce 4 et le fond 6 un espace 25a. Le contact ne peut pas être rétabli sans un démontage du boîtier.

La collerette 25 peut également être remplacée par deux ou plusieurs pattes élastiques isolantes en matière plastique comme décrit précédemment. Si leur coefficient d'élasticité est suffisant, la force d'enclipsage ainsi obtenue peut rendre inutile la présence du ressort 11, la face 4b de la pièce 4 étant appliquée avec la pression nécessaire contre la plage 10. Bien entendu, après traction la pièce 4 se déplace librement à l'intérieur du boîtier 3, mais cela n'a aucune importance dans la mesure où les pattes ou la collerette 25 empêchent tout rétablissement du passage du courant.

Dans ce mode de réalisation, seules les extrémités de l'âme sont tendues et le câble est libre entre ses deux contacteurs. De plus, le contact est assuré de manière positive. Mais la coupure de l'un des côtés du câble n'assure pas la coupure de l'autre extrémité, si celle-ci présente la même structure.

Il est possible de prévoir à l'intérieur du boîtier 3, deux pièces de contact 26 qui, lorsque la pièce 4 effectue son mouvement vers l'avant, permettent soit de fermer un circuit d'alarme ou d'antivol s'il en existe un sur le véhicule, soit de provoquer un court-circuit faisant sauter un fusible si l'une des bornes 26 est à la masse et l'autre sous tension, soit encore d'interrompre le circuit sur l'autre extrémité du câble.

Il est bien entendu possible d'utiliser tout moyen de verrouillage permettant de maintenir après une traction sur le câble un espace 25a entre la pièce 4 et la paroi 6. C'est ainsi par exemple que la paroi périphérique de la pièce 4 peut constituer une came modifiant la position d'un cliquet de verrouillage. Dans ces conditions, toute traction sur la gaine interrompt le passage du courant du côté où cette traction est exercée.

Dans la position représentée sur la figure 15, la pièce 4 (isolée) masque l'accès à la plage conductrice de sorte qu'il n'est plus possible d'atteindre celle-ci avec un fil.

Comme dans le cas des modes de réalisation précédents, la présence d'un boîtier n'est nécessaire que du côté de la source d'alimentation. Toutefois, à titre de sécurité, il est souhaitable de monter également du côté de l'organe utilisateur, par exemple la bobine, un second boîtier. Mais l'existence du câble antivol selon l'invention est particulièrement utile dans les tronçons des circuits électriques reliant la batterie à la clé de contact et le bloc contacteur à la bobine.

Sur les figures 16, 17 et 18 qui représentent un autre mode de réalisation, l'âme 1 du câble est entourée par une gaine 2 dont elle est solidaire. L'extrémité de l'âme 1 est reliée à une pièce de contact 4 mobile à l'intérieur du boîtier 3. Le déplacement vers l'avant (du côté du câble) de la pièce 4 est limité par une plaque 19 fixée à l'intérieur du boîtier 3. La plaque 19 présente une ouverture centrale 33 à l'intérieur de laquelle peut pénétrer la partie avant 4a de la pièce 4. Une seule patte de verrouillage 18 a été représentée sur ces figures.

Bien entendu, conformément à une caractéristique de l'invention, l'âme 1 est tendue, soit par une cosse à ressort se trouvant à l'autre extrémité du câble, soit par un dispositif analogue. Ainsi, en fonctionnement normal, la partie avant 4a de la pièce 4, s'engage à travers l'ouverture 33. Elle vient ainsi porter contre les contacts 10 d'une plaque porte-contact 9 qui est, elle aussi, mobile à l'intérieur du boîtier 3. La plaque 9 est poussée vers la droite de la figure par une jupe 24 qui est creuse, solidaire de la gaine 1, et à l'intérieur de laquelle passe l'âme 1. Ainsi, lorsque l'on visse, à l'aide de l'écrou 20, la gaine 2 sur le corps du boîtier 3, la jupe 24 progresse vers la droite de la figure jusqu'à ce que le contact entre la plaque 9 et la partie 4a soit établi. L'âme 1 est fixée sur le fond 12 de la pièce 4 et un ressort 11 est interposé entre le fond 12 et la plaque 9. Le vissage de la gaine à l'aide de l'écrou 20 provoque, non seulement l'amenée en contact de la pièce 4 avec la plage conductrice 10, mais également la compression du ressort 11. Le contact mécanique et électrique est ainsi établi entre l'âme 1 et la plage conductrice 10.

La figure 16 montre le dispositif en position de fonctionnement normal avec alimentation de l'organe utilisateur par la batterie ou l'alternateur.

La figure 17 représente la position des organes après cisaillage de l'âme et de la gaine en un endroit quelconque (non représenté). A ce moment, la tension exercée sur l'âme disparaît. Il en résulte une décompression du ressort 11 qui amène la pièce 4 sur la droite de la figure, de sorte que l'avant 4a de la pièce 4 et la plage conductrice 10 sont désolidarisés. Le contact est ainsi interrompu et aucun courant ne peut circuler dans l'âme 1. Comme cela sera indiqué par la suite, le contact ne peut pas être rétabli par une simple traction sur l'âme à cause de la présence de moyens de verrouillage.

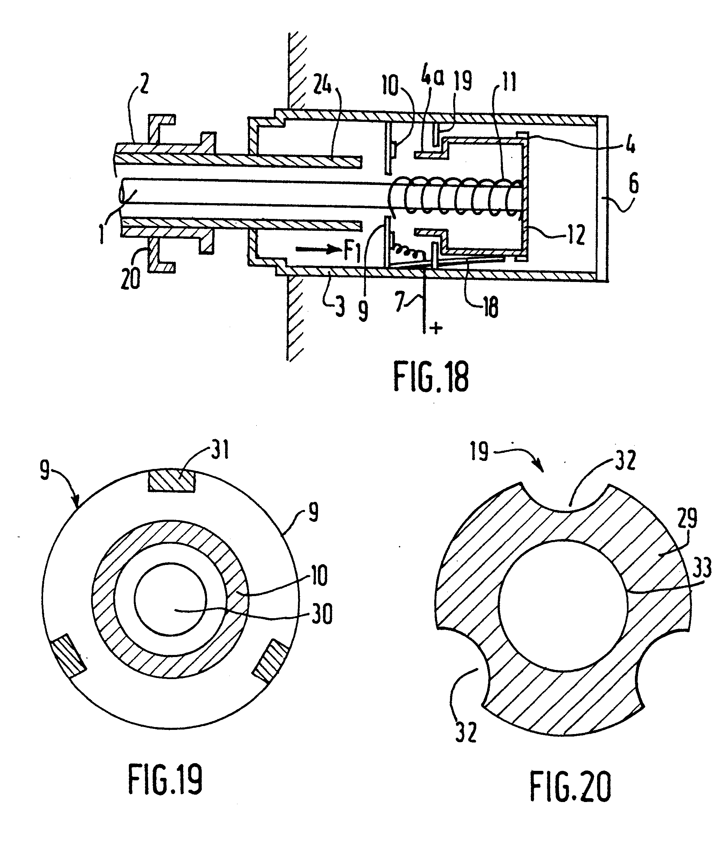

La figure 18 représente le cas où la gaine a été démontée. A ce moment, le dévissage de l'écrou 20 provoque une libération de l'effort exercé par la jupe 24 sur la plaque 9. Le ressort 11 peut alors se détendre à travers l'orifice 23 et éloigne la plaque 9 de la partie avant 4a de la pièce 4. A nouveau, le contact est interrompu entre la plage 10 et la pièce 4. Celle-ci reste dans sa position d'origine et, comme indiqué précédemment, le courant ne peut être rétabli qu'à la suite d'une intervention d'un spécialiste.

Les figures 19 et 20 représentent, en vue selon les flèches F et F1 des figures 16 et 18, les plaques 9 et 19. Elles présentent chacune une ouverture centrale, respectivement 30 et 33, permettant de laisser passer respectivement, pour l'ouverture 33, l'âme 1 et le nez 4a de la pièce 4, et pour l'ouverture 30, l'âme 1.

Des pattes élastiques 18 sont fixées sur la plaque 9. Ces pattes s'étendent perpendiculairement à la surface représentée sur laquelle on ne voit que les pieds 31 de celles-ci. Ces pattes passent à travers des échancrures 32 formées à la périphérie du disque 19.

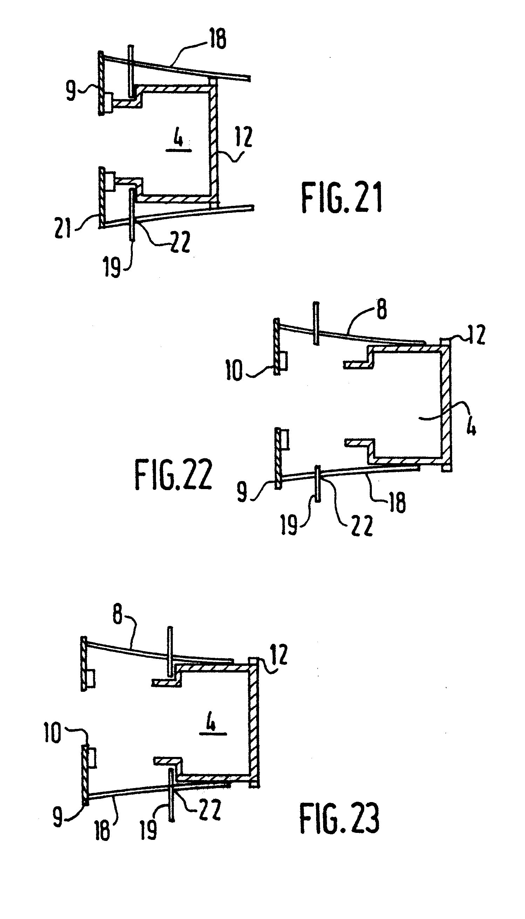

Les figures 21 à 23 sont des schémas montrant les positions des pattes 18 dans les cas représentés sur les figures 16 à 18. Sur la figure 21, les extrémités libres des pattes, qui dans l'exemple représenté sont au nombre de quatre, mais peuvent être plus ou moins nombreuses, prennent appui sur la couronne 12 formant la partie arrière de la pièce 4. Ainsi, celle-ci peut se déplacer vers la droite de la figure ou vers l'arrière en déformant les pattes 18. Ce mouvement entraîne par élasticité des pattes 18, la portée des extrémités de celles-ci sur la paroi externe latérale de ladite pièce. Cette position est représentée sur la figure 22. Ainsi, si l'on tire, après coupure, sur l'âme 1 la pièce 4 a tendance à être ramenée vers l'avant. Mais la portée des extrémités des pattes 18 sur la collerette 12 forme une butée qui limite le déplacement vers l'avant et s'oppose au rétablissement du contact. La distance entre les plaques 9 et 19 n'a pas varié dans les deux cas.

La figure 23 représente le cas contraire, correspondant à celui représenté sur la figure 17. Dans ce cas, la gaine a été démontée. A ce moment, sous l'action du ressort 11, la plaque 9 se déplace vers l'avant de la figure, ce qui l'éloigne de la plaque 19. Bien entendu, au cours de son déplacement, elle entraîne les pattes 18 de sorte que les extrémités de celles-ci tombent de la collerette 12 contre la paroi latérale de la pièce 4. A nouveau, lorsque l'on remonte la gaine, les extrémités des pattes 18 glissent le long de la paroi latérale de la pièce 4 et viennent en butée contre la collerette 12, de sorte qu'elles déplacent celle-ci vers la droite (comme dans le cas de la figure 22) et que le contact est à nouveau rendu impossible. Bien entendu, après une tentative de vol, le contact peut être rétabli mais seulement par un personnel qualifié utilisant un outillage spécialisé.

Ainsi, grâce aux mesures faisant l'objet de la présente invention, le véhicule est protégé contre les tentatives de vol, soit par cisaillage du câble ce qui provoque le mouvement arrière de la pièce 4, soit par démontage de la gaine ce qui se traduit par un mouvement avant de la plaque 9 porte-contact, ces mouvements provoquant l'interruption de passage du courant dans l'âme.

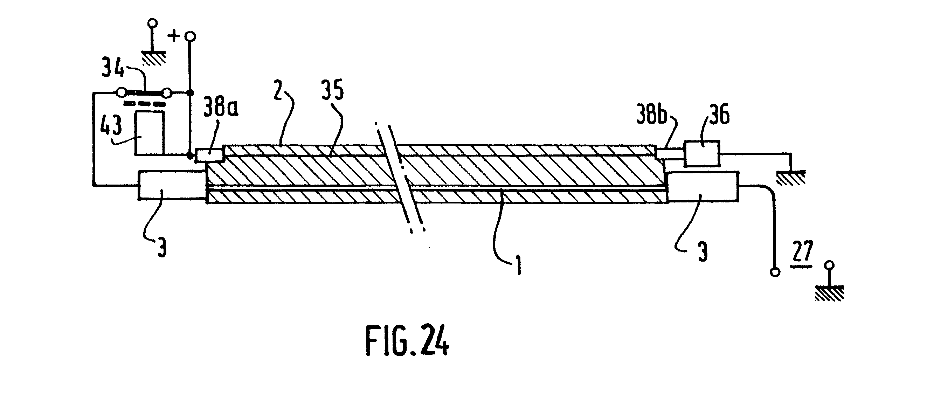

Un autre mode de réalisation est représenté sur la figure 24. Dans ce mode de réalisation, la gaine est une gaine en matière plastique ou analogue 2 ne présentant pas de résistance mécanique particulière. A l'intérieur de la gaine est noyé un conducteur 35. Comme il est d'usage courant en électricité automobile, le conducteur 35 est branché par un connecteur multi-broches entre deux broches 38a et 38b simultanément au branchement du conducteur principal. La broche 38a située du côté de l'alimentation en tension est connectée d'une part à la source de tension, et d'autre part à la bobine 43 d'un électro-aimant dont le noyau est relié à une palette permettant d'ouvrir ou de fermer un interrupteur 34. L'interrupteur 34 est représenté en position fermée et les autres éléments du circuit sont en position de fonctionnement. La bobine de l'électro-aimant 43 peut être branchée sur la source de tension par l'intermédiaire d'un circuit approprié de manière à ce que l'interrupteur 34 reste fermé tant que le courant électrique passe dans le conducteur 35. Bien entendu, tout autre moyen d'interruption de passage du courant tel qu'un thyristor par exemple peut être utilisé. L'interrupteur 34 est connecté d'une part à la source de tension, et d'autre part, par l'intermédiaire du boîtier 3, à l'âme conductrice 1, de manière à acheminer le courant sur la borne 27 d'un organe utilisateur. Sur le fil conducteur 35 est appliquée la tension qui est acheminée par une broche 38b à enfichage, à travers un organe 36 relié à la masse. Il est encore possible de prévoir, à l'intérieur de la gaine 2, deux fils conducteurs isolés l'un de l'autre et dont les extrémités sont mises en contact électrique par enfichage de la cosse 38b. Ces deux fils constituent alors le circuit permettant l'établissement d'un courant d'entretien dans le solénoïde 43. Sur la figure 24 on a représenté le fil 35 sous forme d'un conducteur rectiligne, mais de préférence, ce fil est enroulé en spirale à l'intérieur de la gaine pour éviter un repérage permettant des opérations de coupure.

Le fonctionnement de ce dispositif est le suivant : au cours du fonctionnement normal, l'interrupteur 34 est fermé et conduit la tension par l'intermédiaire des boîtiers 3 et de l'âme 1 sur la borne 27 de l'appareil utilisateur. Simultanément, le solénoïde 43 est alimenté et le circuit se ferme à la masse par le conducteur 35. Si l'on débranche la gaine, le solénoïde n'est alors plus alimenté puisque le contact est coupé au niveau d'une des broches 38 et par suite le contacteur 34 s'ouvre, ce qui interdit tout passage du courant dans l'âme conductrice 1 et, par suite, fait disparaître la tension sur la borne 27. De même, dans le cas où l'on coupe la gaine, le fil 25 est coupé et le contact 24 s'ouvre automatiquement de sorte qu'il n'est plus possible de mettre en route le véhicule si, par exemple, le dispositif décrit est relié à la bobine d'allumage. De préférence, l'interrupteur 34 est muni de moyens interdisant son réamorçage immédiat. L'efficacité du dispositif antivol est ainsi considérablement renforcée. Dans ce mode de réalisation, l'information de conduction du circuit consiste en une information électrique alors que jusqu'à présent cette information n'était que mécanique.

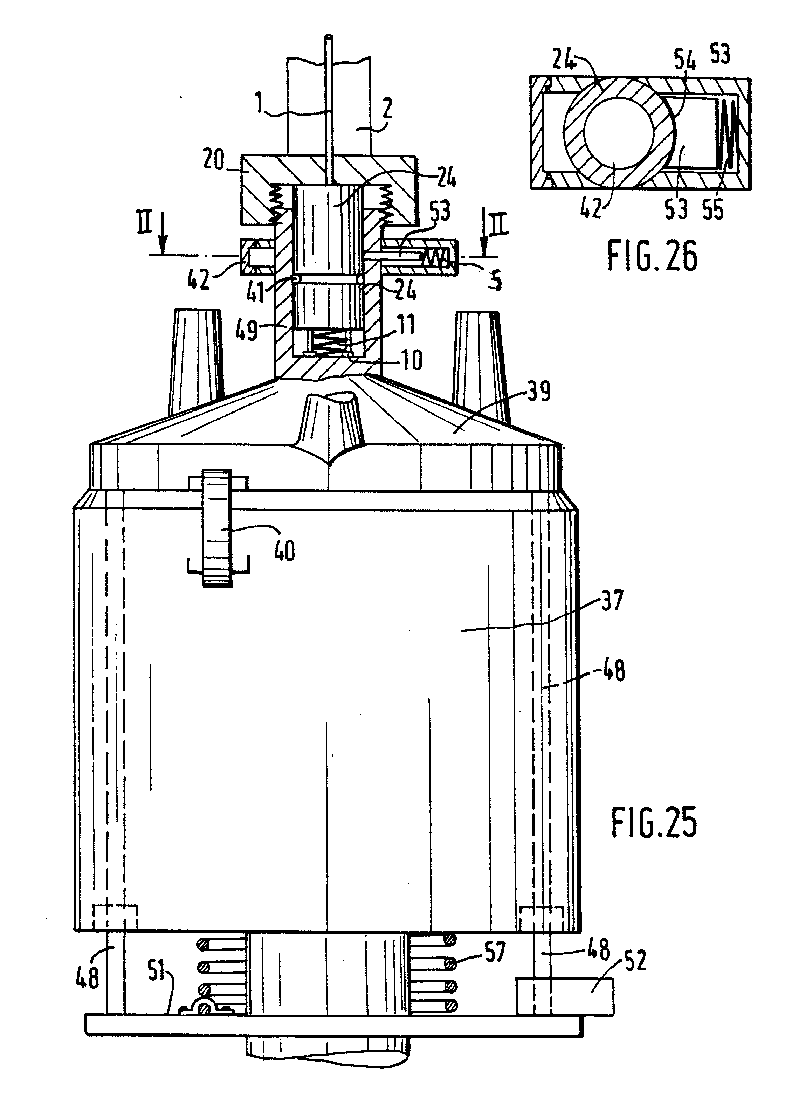

Sur la figure 25, on distingue un distributeur d'allumage comprenant un corps 37 et un couvercle 39. A la partie supérieure du couvercle s'étend une cheminée cylindrique 49 terminée par un filetage sur lequel vient se visser un écrou 20 solidaire de la gaine 2 du câble électrique d'alimentation. L'âme 1 de ce câble est reliée à une jupe conductrice 24 qui, pressée par le vissage de l'écrou 20 sur le pas de vis de la cheminée 49, provoque la mise en contact électrique de l'âme 1 avec une plage conductrice 10 reliée au plot d'arrivée du courant haute tension. Le chapeau 39 est assujetti sur le corps 37 d'une manière traditionnelle, c'est-à-dire soit par des genouillères élastiques 40, soit encore par des vis. L'autre extrémité de l'âme 1 est reliée à la bobine par un montage du type décrit précédemment, de sorte que, lorsque la gaine 2 est démontée, le passage du courant dans l'âme devient impossible.

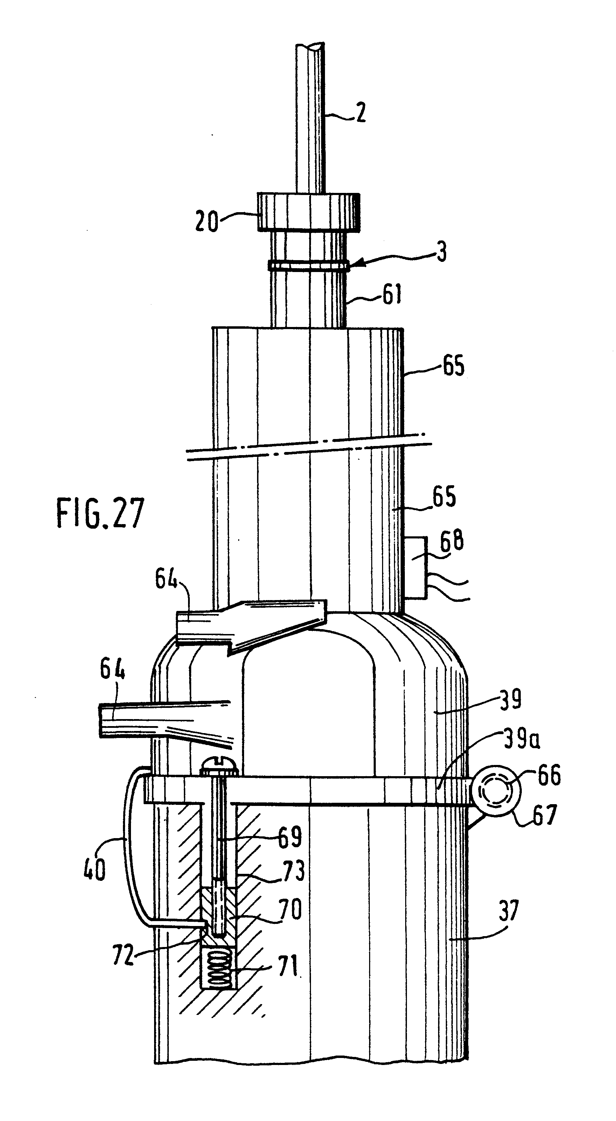

A la partie supérieure de la cheminée 49, s'étend transversalement un logement 42 à l'intérieur duquel se trouve une pièce ou organe de blocage comme représenté sur la figure 26. Cet organe comprend un ressort 55 et une plaque 53 de verrouillage armée par le ressort 55. La partie avant de la plaque 53 présente une échancrure 54. A l'origine, la plaque 53 prend appui, sous la pression du ressort 55 contre la surface extérieure de la jupe 24. Lorsque l'on dévisse l'écrou 20, la jupe 24 remonte sous l'action du ressort 11, de sorte que les bords de l'échancrure 54 viennent s'insérer dans la rainure 41 de la jupe 24. Ainsi, la jupe 24 est bloquée en position haute et il n'est plus possible d'établir de contact entre l'âme 1 et la plage conductrice 10 ni de passer un conducteur à travers la jupe. Bien entendu, l'espace compris entre les électrodes de la jupe 24 et la plage conductrice 10 est suffisant pour qu'il ne se produise pas de claquage électrique.

La plaque 53 ne peut être débloquée que par ouverture du logement 42, ce qui demande d'une part un certain temps, et d'autre part un outil spécial pour permettre à nouveau à la jupe 24 de descendre à l'intérieur de la cheminée. Bien entendu la distance entre le niveau de la plaque 53 et celui de la rainure 31 en position d'utilisation est supérieure à la hauteur du pas de vis 13, de sorte que l'on ne puisse pas, par vissage, provoquer la cassure de la plaque 53 qui, par ailleurs, est suffisamment résistante. Il est également possible de prévoir dans la jupe 24 une lumière dans laquelle peut pénétrer la plaque 53.

Ainsi, il n'est plus possible d'avoir accès au plot d'arrivée du courant haute tension, après démontage de la gaine, la jupe 24 restant bloquée en position haute à l'intérieur de la cheminée, la jupe 24 présentant un fond plein.

Mais, il est possible de séparer la tête du distributeur et le corps de celui-ci. Le voleur peut être en possession d'un chapeau d'allumeur de rechange. Afin de remédier à cet inconvénient, on prévoit à l'intérieur du corps 37 et à la périphérie de celui-ci des tiges métalliques 48 s'étendant sur toute la hauteur du corps et réunies à leur partie inférieure par un étrier 51.

La partie supérieure des tiges 48 peut affleurer la surface supérieure du corps 37 ou faire saillie en s'engageant dans des cavités prévues à cet effet. L'étrier 51 est éloigné du fond du corps 37 par un ressort de rappel 57. Sur la figure 25, le chapeau 39 est monté sur le corps 37 et assure le contact. Lorsque le chapeau est démonté, le ressort de rappel 57 fait saillir les tiges 48 à la surface supérieure du corps et il est impossible de monter un autre chapeau, la position haute des tiges 48 étant verrouillée par un boitier 52 contenant une goupille ou des moyens de blocage. Pour remettre l'ensemble en état de march, il est nécessaire de changer le boitier 52 ou de réamorcer celui-ci. Ainsi, les tiges 48 ne peuvent être rétractées à l'intérieur du corps 37 que par réamorçage du verrouillage 52, ce qui demande un certain temps.

La bobine d'allumage est avantageusement solidaire du chapeau du distributeur. Jusqu'à présent, la bobine était reliée au distributeur par un câble électrique convenablement isolé. Cela résultait du fait que les bobines d'allumage étaient constituées d'enroulements isolés par de l'huile susceptible de fuir. Avec l'apparition de bobines sèches, il n'est plus nécessaire de séparer la bobine du distributeur ce qui supprime une liaison électrique.

Sur la figure 27, le courant d'alimentation arrive sur la bobine 65 par le fil extérieur 2 relié à la batterie par l'intermédiaire du contacteur de tableau de bord. Le fil 2 est monté sur la bobine 65 au moyen d'un dispositif comprenant un contacteur de sécurité 3. Le contact est établi par vissage de l'écrou 20 sur le col 61 de la bobine. La bobine 65 est reliée par un dispositif commutateur 68 au rupteur qui, par suppression du courant dans le circuit primaire, permet le développement dans l'enroulement secondaire d'une très haute tension. Comme dans la technique antérieure, cette THT est acheminée sur une électrode en graphite en contact avec un doigt distributeur (non représenté), le doigt distributeur étant entraîné par une prise mécanique réalisée sur le moteur, de sorte que la vitesse de distribution soit directement proportionnelle à la vitesse de rotation du moteur.

Le carter de la bobine 65 est intégré au couvercle 39 du distributeur. Dans l'exemple représenté, le faisceau des connexions électriques des bougies est branché latéralement par rapport au couvercle, perpendiculairement à l'axe du corps du distributeur, dans des embouts 64 dont chacun correspond à un cylindre, et dont seuls deux apparaissent sur la figure. Le couvercle 39 prend appui sur le corps 37 du distributeur par l'intermédiaire d'une couronne 39a venant recouvrir le bord supérieur du corps 37.

Conformément à l'invention, le couvercle 39 est articulé sur le corps 37 par un axe 66 terminé par deux flasques 67. Dans l'exemple représenté, l'axe 66 est opposé aux embouts de connexion 64. Bien entendu, le doigt distributeur (non représenté) fait saillie à l'intérieur du couvercle et vient porter successivement sur les plages conductrices de chacune des embouts au moment où la haute tension est disponible. La fermeture du couvercle du distributeur sur le corps de celui-ci peut être assurée par une ou plusieurs genouillères 40 dont l'une des extrémités est articulée sur le corps 37 et dont la seconde extrémité vient porter d'une manière élastique sur la couronne 39a.

Il est également possible de fermer le couvercle sur le corps au moyen de vis 69 telle que celle qui est représentée sur la figure. La vis 69, prenant appui par sa tête sur la couronne 29a, pénètre à l'intérieur d'un alésage borgne 73, à l'intérieur duquel est fixée, par une goupille 72, une douille filetée 70 armée par un ressort de rappel 71. Si, le voleur, après avoir ouvert le capot 39, cherche à extraire la genouillère 40, il retire la goupille 72 de la douille 70 filetée intérieurement, et celle-ci, sous l'influence du ressort 71, remonte à l'intérieur de l'alésage 73. Si, ultérieurement, il essaye de mettre un couvercle de rechange à l'endroit précédent, il n'a aucune possibilité de visser à nouveau une vis 69 puisque la douille 70 est libre dans l'alésage 73. Il est ainsi impossible de réaliser un démarrage frauduleux par utilisation d'une bobine volante puisque, en tout état de cause, le chapeau du distributeur ne peut pas être assujetti convenablement sur le corps de celui-ci.

Bien entendu, dans le cas où le couvercle 39 n'est pas articulé sur le corps 37 au moyen d'un axe permanent, mais est articulé au moyen d'une anse passant à travers le chapeau 39, et dont les extrémités pénètrent à l'intérieur du corps 37, celles-ci constituent les goupilles 72, de sorte qu'il ne soit pas possible de monter une tête de rechange, que cette tête soit solidaire de la bobine ou non. L'anse peut par ailleurs être reliée à un circuit électrique de sécurité de sorte que sa rupture interdise la mise en route du moteur.

## Revendications

1. Câble électrique antivol comprenant au moins une âme conductrice, une gaine au moins en partie isolante et des moyens de connexion, caractérisé en ce qu'il est connecté entre une source de tension électrique et l'organe utilisateur par l'intermédiaire d'au moins un contacteur (3), ledit contacteur recevant, une information sur l'état, conducteur ou non, du câble, et comportant des moyens (11, 34) pour interrompre le passage du courant en fonction de cette information.

2. Câble électrique antivol selon la revendication 1, caractérisé en ce que l'information agit sur des moyens de verrouillage (18).

3. Câble électrique antivol selon la revendication 1, caractérisé en ce que, après montage, l'âme (1) est sous tension mécanique et maintient un contact mécanique entre des pièces (4, 10) du boîtier de connexion (3).

4. Câble électrique antivol selon la revendication 1, caractérisé en ce que l'âme (1) est enroulée en spirale, la gaine (2) étant inextensible, et la longueur de la spirale au repos étant inférieure à la longueur de la gaine.

5. Dispositif de mise en oeuvre du câble selon l'une quelconque des revendications précédentes, caractérisé en ce que l'âme (1) est reliée de part et d'autre à une pièce de connexion mobile (4) à l'intérieur d'un contacteur (3), ladite pièce de connexion (4) pouvant être verrouillée à l'intérieur du contacteur (3).

6. Dispositif comprenant un câble selon la revendication 3, caractérisé en ce que l'âme (1), est rectiligne et/ou linéaire sur au moins une partie de sa longueur, la tension mécanique étant appliquée à l'aide des ressorts (11).

7. Dispositif selon la revendication 5, caractérisé en ce que l'âme (1) du câble reliant deux contacteurs (3) est au moins en partie linéaire, la tension établie entre les deux contacteurs provoquant le contact mécanique de la pièce (4) solidaire de l'extrémité de l'âme contre une zone conductrice (10) et l'écrasement d'un ressort (11), la zone conductrice étant reliée à une source électrique ou à un appareil utilisateur.

8. Dispositif selon l'une quelconque des revendications 5 à 7, dans lequel l'âme (1) peut se déplacer par rapport à la gaine, cette âme (1) étant reliée par au moins une de ses extrémités à une pièce de contact pouvant coulisser à l'intérieur d'un contacteur, et armée par un ressort, caractérisé en ce que la cosse de contact (4a) est protégée par un fourreau (24) dont la longueur est supérieure à celle de la cosse.

9. Dispositif de montage antivol d'un câble électrique selon l'une quelconque des revendications 5 à 7, dont au moins une extrémité de l'âme (1) du câble est solidaire d'une pièce mobile (4) à l'intérieur d'un boîtier, caractérisé en ce que la pièce mobile est appliquée contre une surface conductrice par des moyens de compression (11), des second moyens (25) empêchant le contact de la pièce avec la surface conductrice lorsque le câble a subi une traction.

10 Câble selon la revendication 3, l'âme et la gaine pouvant subir des translations relatives, caractérisé en ce qu'un fourreau (24) est solidarisé de la gaine, le fourreau entourant l'âme (1) et pénétrant à l'intérieur du boîtier (3) de manière à venir en butée contre une plaque (9) mobile portant des contacts, la pièce mobile (4) comportant, à sa partie avant, une zone (4a) de diamètre réduit pouvant passer à travers une ouverture (30) formée dans une plaque (19) fixée à l'intérieur du boîtier, un ressort (11) étant disposé entre le fond de la pièce de contact (4) et la plaque porte-contact (9).

11 Câble selon la revendication 10, caractérisé en ce que la plaque porte-contact est munie de pattes élastiques (18) dont l'extrémité libre porte, soit sur une couronne (12) du fond de la pièce (4), soit sur la paroi latérale de la pièce (4), des pattes (18) ayant pour but de former des butées de verrouillage, le passage du courant étant interrompu, tant en cas de coupure de l'âme (1), qu'en cas de démontage de la gaine (2).

12 Câble selon la revendication 1, caractérisé en ce que, au moins un fil conducteur (35), relié à des moyens d'interruption du courant électrique (34, 43), est noyé à l'intérieur de la gaine (2), la rupture du fil conducteur (35) provoquant la coupure se traduisant par la coupure du circuit principal par l'interrupteur (34, 43).

13 Dispositif antivol comprenant un câble, une âme et une gaine selon l'une quelconque des revendications précédentes, caractérisé en ce que la gaine (2) est montée de manière amovible sur l'extrémité de la tête d'allumage (39), l'âme du câble étant solidaire d'une jupe (24) établissant le contact entre l'âme (1) et une plage conductrice (10) de la tête d'allumage en comprimant un ressort (11), lorsque la gaine est convenablement montée, des moyens de verouillage (53, 55) interdisant le rétablissement du contact.

14 Distributeur de véhicule automobile équipé d'un dispositif antivol selon la revendication 13, comprenant un corps (37) et une tête (39) montée de manière amovible sur le corps, caractérisé en ce que la tête (39) est articulée sur le corps (37).

15 Distributeur selon la revendication 14, caractérisé en ce que la bobine d'allumage (65) est solidaire de la tête (39) du distributeur.

0228327

FIG.1

FIG.2

FIG.3

FIG.4

FIG.5

0228327

FIG.6

FIG.7

0228327

FIG.8

FIG.9

0228327

FIG.10

FIG.11

0228327

FIG.12

FIG.13

0228327

FIG.14

FIG.15

0228327

FIG.16

FIG.17

0228327

FIG.18

FIG.19

FIG.20

0228327

FIG.21

FIG.22

FIG.23

FIG.24

0228327

FIG.26

FIG.25

0228327

FIG.27

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 161 365 (C.L. DAVID) <br> * Page 20, lignes 24-31; figure 6 * | 1 | H 01 B    7/00 <br> B 60 R   25/04 <br> H 01 H   35/00 |
| A | | 5 | |
| Y | FR-A- 970 654 (DUBOS) <br> * Pages 1,2; figure unique * | 1 | |
| A | | 3,5,6, 12 | |
| A | FR-A- 647 129 (DARDELET) <br> * Page 1, lignes 8-45; figure unique * | 3,4 | |
| A | US-A-2 820 149 (ROTH) <br> * Colonne 1, ligne 67 - colonne 2, ligne 51; figure unique * | 6 | |
| A | US-A-2 563 335 (ISTRATI) <br><br> * Colonne 1, ligne 49 - colonne 2, ligne 38; figures 1,2 * | 3,5,6, 8,9 | |

| | DOMAINES TECHNIQUES RECHERCHES (Int. Cl.4) |
|---|---|
| | H 01 B <br> B 60 R <br> H 01 H |

Le présent rapport de recherche a été établi pour toutes les revendications

| Lieu de la recherche | Date d'achèvement de la recherche | Examinateur |
|---|---|---|
| LA HAYE | 16-03-1987 | DEMOLDER J. |